# EUROPÄISCHE PATENTSCHRIFT

(11) **EP 2 650 576 B1**
(45) Veröffentlichungstag und Bekanntmachung des Hinweises auf die Patenterteilung: **19.09.2018**
(21) Anmeldenummer: 13001350.1
(22) Anmeldetag: 16.03.2013
(51) Int. Cl.: F16L 5/06, H02G 3/06, H02G 15/013, H02G 3/22

(54) **Doppelnippel zur abgedichteten Verlegung von Langformteilen**
Double nipple for the sealed laying of long moulded parts
Raccord double pour la pose étanche de pièces longilignes

(30) Priorität: 13.04.2012 DE 102012103184
(43) Veröffentlichungstag der Anmeldung: 16.10.2013
(73) Patentinhaber: Pflitsch GmbH & Co. KG., 42499 Hückeswagen (DE)
(72) Erfinder: Schwinning, Ulrike, 42499 Hückeswagen (DE); Lechner, Martin, 51789 Lindlar (DE)
(74) Vertreter: Geskes, Christoph

(56) Entgegenhaltungen:
- DE-U1- 9 309 840
- JP-A- H05 180 210
- US-A1- 2009 025 977

## Beschreibung

Die Erfindung betrifft einen Doppelnippel und/oder eine Spannmutter zur abgedichteten Verlegung von Rohren, Leitungen und dergleichen Langformteilen durch Lochungen von Gerätewandungen und dergleichen Bauteilen, wobei der Doppelnippel zumindest aus einem rohrförmigen Abschnitt mit erstem Außengewinde, auf das eine Druckschraube aufschraubbar ist, sowie mit darauf folgendem Kragen zur Anlage an der Wandung, einem zweiten Außengewinde zur Verschraubung einer Spannmutter mit Innengewinde und außen umlaufenden Kragen besteht, wobei der Doppelnippel und/oder die Spannmutter längsgeteilt ist und somit Trennstellen bildet und aus zwei Halbschalen besteht, die miteinander verbindbar sind, die ineinander greifende Führungs- und Haltemittel aufweisen, mittels derer die Halbschalen in der Zusammenbaulage zueinander gehalten sind, wobei die ineinander greifenden Führungs- und Haltemittel am Kragen ausgebildet sind, wobei als Führungs- und Haltemittel an der ersten Halbschale sich etwa tangential erstreckende, über die Trennstelle in Richtung zur zweiten Halbschale vorragende, hakenartige Arme ausgebildet sind, die jeweils in der Zusammenbaulage in an der zweiten Halbschale ausgebildete Rastausnehmungen eingreifen oder dort ausgebildete Rastvorsprünge übergreifen und die beiden Halbschalen zusammenhalten.

Derartige Doppelnippel finden häufig bei Kabelverschraubungen für durch Gerätewandungen und dergleichen Bauteile geführte Kabel oder dergleichen Verwendung, und sind im Stand der Technik vielfach bekannt. Sie dienen dazu entsprechende Kabel oder dergleichen abgedichtet und/oder zugentlastet in Gehäuse einzuführen oder durch Wandungen hierdurch zu führen.

Auch sind im Stand der Technik Doppelnippel bekannt, die längsgeteilt sind und aus zwei Halbschalen, die miteinander verbindbar sind, bestehen. Derartige längsgeteilte Doppelnippel können auch nachträglich bei bereits durch Gerätewandungen und dergleichen Bauteile verlegten Langformteilen verwendet werden, und dienen häufig dazu, bereits bestehende Kabeldurchführungen, die beschädigt wurden oder nicht mehr ausreichende Dichtigkeit aufweisen, zu ersetzen. Ein derartiger Doppelnippel kann auf schnelle und einfache Art und Weise auf das durchzuführende Langformteil aufgebracht werden, anschließend mit einem ersten Gewindeabschnitt in die Lochung der Gerätewandung oder des Bauteiles eingesteckt und mit dem Kragen an die Gerätewandung angelegt werden, und anschließend kann eine Spannmutter auf den über die Wandung vorragenden Gewindebereich zum Zwecke der Fixierung des Doppelnippels aufgeschraubt werden. Somit können auf schnelle und einfache Art und Weise bereits bestehende Kabeldurchführungen ersetzt werden. Im Stand der Technik sind auch geteilte Druckschrauben und Spannmuttern bekannt. Zum Stand der Technik wird auf die DE 43 22 032 C1 und die DE 198 288 38 B4 verwiesen.

Aus der US 2009/025977 A1 ist ein Doppelnippel in geteilter Ausführungsform mit Spannmutter bekannt, wobei die Spannmutter ebenfalls geteilt ausgebildet ist und auch die entsprechende Druckschraube. An den Trennstellen ist die Spannschraube und die Druckschraube mittels entsprechender Führungs- und Haltemittel verbindbar, wobei eine Längsverschiebung der Teile zueinander zur Einstellung der Verbindungslage erforderlich ist.

Aus der DE 93 09 840 U1 ist ebenfalls eine geteilte Druckschraube und ein längsgeteilter Doppelnippel bekannt, wobei die Druckschraube aus miteinander verbindbaren Einzelteilen besteht. Dabei ist wiederum eine Längsverschiebung der Einzelteile der Druckschraube zueinander erforderlich.

Aus der JP A 05 180 210 A ist eine geteilte Druckschraube bekannt, die an der Trennstelle mit Verbindungsmitteln verbindbar ist, wobei die Verbindungsmittel als sich tangential erstreckende Arme und dazu passende Rastausnehmungen ausgebildet sind.

Aufgrund des eingangs genannten Standes der Technik liegt der vorliegenden Erfindung die Aufgabe zugrunde, einen Doppelnippel und/oder eine Spannmutter der eingangs genannten Art zu schaffen, der oder die auf schnelle und einfache Art und Weise eine Verbindung der beiden Halbschalen zu einem Doppelnippel oder zu der Spannmutter ermöglicht, der zudem kostengünstig und einfach herstellbar ist und eine hohe Lebensdauer auch bei hohen Belastungen aufweist.

Zur Lösung dieser Aufgabe schlägt die Erfindung vor, an der zweiten Halbschale über die Trennstelle in Richtung zur ersten Halbschale hinausragende Arme ausgebildet sind, die jeweils in einen Führungskanal der ersten Halbschale einsteckbar und in diesem geführt sind, der im Kragen ausgebildet ist und zur Trennstelle offen ausmündet, und die sich mit einem Anlagebereich federnd an einem äußeren Mantelbereich eines rohrförmigen Abschnitts des Doppelnippels oder der Spannmutter der ersten Halbschale abstützen, der den Boden des Führungskanals bildet, und die beiden Halbschalen in einer voneinander beabstandeten Vormontagelage aneinander halten, in der die hakenartigen Arme mit ihrem freien Endbereich an die Rastvorsprüngen angelegt sind, ohne sie zu übergreifen.

Die Halbschalen des Doppelnippels sowie die Halbschalen der Spannmutter müssen lediglich etwa radial an das Langformteil, wie beispielsweise Kabel, angelegt werden, so dass die hakenartigen Arme der ersten Halbschale in Richtung der Rastvorsprünge oder Rastausnehmungen der zweiten Halbschale gerichtet sind. Anschließend können die beiden Halbschalen manuell oder gegebenenfalls durch Zuhilfenahme eines Werkzeuges wie beispielsweise einer Zange zueinander bewegt werden, so dass die hakenartigen Arme der ersten Halbschale in die an der zweiten Halbschale ausgebildeten Rastausnehmungen eingreifen oder dort ausgebildete Rastvorsprünge übergreifen, um die beiden Halbschalen dauerhaft zusammenzuhalten.

Die hakenartigen Arme der ersten Halbschale sind dabei so stabil ausgebildet, dass die beiden Halbschalen an ihren Trennstellen in einer aneinander liegenden Position verbleiben. Die beiden Halbschalen sind so zu einem Doppelnippel oder zu einer Spannmutter zusammengehalten, ohne dass weitere Haltemittel erforderlich sind.

Zur erleichterten Zusammenführung der beiden Halbschalen des Doppelnippels und um eine besonders sichere Verbindung entlang der längs verlaufenden Trennstellen zu ermöglichen, können die Trennstellen im Bereich des ersten Außengewindes und/oder im Bereich des zweiten Außengewindes jeweils Nuten und passende Federn aufweisen.

Durch die an der zweiten Halbschale ausgebildeten und in Umfangsrichtung über die Trennstelle hinausragenden Arme ist bereits in einer voneinander beabstandeten Vormontagelage der beiden Halbschalen ein Zusammenhalt der beiden Halbschalen ermöglicht. Somit können derartig ausgebildete Halbschalen auf schnelle und einfache Art und Weise ohne Zuhilfenahme von Werkzeug manuell in eine vom Langformteil radial beabstandete Vormontagelage verbracht werden, in der sie selbständig verbleiben. Anschließend kann beispielsweise nach Überprüfen der korrekten Lage beziehungsweise des korrekten Sitzes des Doppelnippels oder der Spannmutter ein Werkzeug wie beispielsweise eine Zange zu Hilfe genommen werden, um die sich in der beabstandeten Vormontagelage befindlichen Halbschalen in die Zusammenbaulage zu bewegen, um ein dauerhaftes Verbleiben in der Zusammenbaulage, in der die Haken der Arme der ersten Halbschale in die an der zweiten Halbschale ausgebildeten Rastausnehmungen eingreifen oder dort ausgebildete Rastvorsprünge übergreifen, zu ermöglichen. Dabei ist durch die Führungskanäle, die an der ersten Halbschale ausgebildet sind, ein lagerichtiges Einführen der Arme der zweiten Halbschale auf besonders einfache Art und Weise ermöglicht. Hierdurch ist beispielsweise auch ein Zusammenführen der beiden Halbschalen bei schlechten Sichtbedingungen oder nur geringem Platz auf einfache Art und Weise ermöglicht.

Insbesondere kann besonders bevorzugt vorgesehen sein, dass an der zweiten Halbschale Führungsstege beidseits neben jeder Rastausnehmung oder neben jedem Rastvorsprung ausgebildet sind, die eine Führung für die hakenartigen Arme der ersten Halbschale bilden.

Derartige Führungsstege bilden eine Einführhilfe für die hakenartigen Arme der ersten Halbschale und erhöhen in der Zusammenbaulage die Stabilität des Doppelnippels oder der Spannmutter. Durch diese Führungen ist eine axial gerichtete Längsverschiebung der beiden Halbschalen zueinander ab dem Moment verhindert, indem sich die hakenartigen Arme der ersten Halbschale zwischen den Führungsstegen der zweiten Halbschale befinden, da die Führungsstege die Arme in deren Längsrichtung führen, eine dazu quer gerichtete Bewegung aber verhindern.

In an sich bekannter Weise kann besonders bevorzugt vorgesehen sein, dass an dem Innenmantel des rohrförmigen Abschnitts des Doppelnippels ein Absatz ausgebildet ist.

Ein derartiger Absatz dient beispielsweise als Anschlag für einen teilweise oder gänzlich innerhalb des Doppelnippels angeordneten Dichtkörper, der mittels einer auf den Doppelnippel aufgeschraubten Druckschraube anspannbar ist.

Weiter kann besonders bevorzugt vorgesehen sein, dass der Führungskanal etwa tangential zum Mantel der ersten Halbschale gerichtet ist und am hinteren, der Trennstelle abgewandten Ende offen ausmündet.

Hierdurch ist es möglich durch einen Werkzeugeingriff vom offenen Ende her, z.B. mittels eines Schraubendrehers, die Rastverbindung zu lösen, sofern dies erforderlich ist.

Zudem kann besonders bevorzugt vorgesehen sein, dass die an der zweiten Halbschale ausgebildeten Arme an ihrem freien Ende eine von dem Anlagebereich nach außen ragende Abwinklung aufweisen, die eine Einführhilfe für die geschrägten Endbereiche der hakenartigen Arme der ersten Halbschale bildet. Hierdurch wird das lagerichtige Zusammenführen der Halbschalen erleichtert und gefördert.

Zudem ist bevorzugt vorgesehen, dass das freie Ende der an der zweiten Halbschale ausgebildeten Arme in der Vormontagelage in dem Zuführkanal geführt ist, wobei sich die Abwinklung in der Vormontagelage an Teilen der Kontur, die den Zuführkanal bildet, federnd abstützt und somit den Anlagebereich gegen den äußeren Mantel der ersten Halbschale in einem Bereich presst, der von dem Führungskanal überdeckt ist.

Beim Zusammensetzen einer ersten und einer zweiten erfindungsgemäßen Halbschale werden die nach außen abgewinkelten freien Enden der an der zweiten Halbschale ausgebildeten Arme in einer ersten Vormontagelage in dem Zuführkanal, der sich zwischen dem Innenmantel des rohrförmigen Abschnitts und dem hakenartigen Arm der ersten Halbschale befindet, geführt. Beim anschließenden Annähern der beiden Halbschalen stützen sich die an den freien Enden ausgebildeten Abwinklungen mit ihren Endbereichen federnd an Teilen des Zuführkanales ab und drücken elastisch den Anlagebereich der Arme der zweiten Halbschale gegen den Mantel der ersten Halbschale, so dass ein Verbleiben in dieser voneinander beabstandeten Vormontagelage der Halbschalen selbständig ermöglicht ist. Anschließend kann nun ein Zusammendrücken in die Zusammenbaulage der Halbschalen beispielsweise unter Zuhilfenahme eines entsprechenden Werkzeuges wie beispielsweise einer Zange erfolgen.

Darüber hinaus kann bei dem Doppelnippel besonders bevorzugt vorgesehen sein, dass an jeder Halbschale eine elastische Dichtung angeordnet ist, die sich ohne Unterbrechung ringartig zwischen Kragen und dem rohrförmigen Abschnitt mit erstem Gewinde erstreckt. Auch ist bevorzugt vorgesehen, dass sich die elastische Dichtung jeweils über einen die Trennstelle kreuzenden Bereich und ringartig über den Innenmantel der Halbschalen erstreckt. Zudem kann vorgesehen sein, dass eine weiter elastische Dichtung auf der Stirnfläche der Trennstelle mindestens einer Halbschale vorgesehen ist.

Durch eine derartige Anordnung einer elastischen Dichtung ist in der aneinandergesetzten Zusammenbaulage der beiden Halbschalen eine durchgehende Abdichtung sowohl gegenüber einer durchzuführenden Wandung als auch gegenüber einem innerhalb des Doppelnippels durchgeführten Langformteils ermöglicht. Insbesondere durch den Verlauf der elastischen Dichtung über den Innenmantel und einen die Trennstelle kreuzenden Bereich ist auch eine Abdichtung der beiden Halbschalen zueinander gegeben.

Bevorzugt ist zudem vorgesehen, dass die Dichtung der ersten Halbschale bis über den den Führungskanal überdeckenden, in Richtung zur zweiten Halbschale vorragenden Steg erstreckt, dass ferner die Dichtung der zweiten Halbschale bis über den bis zur Trennstelle verlaufenden Endbereich des Kragens erstreckt, sodass in der Endmontagesolllage Dichtungsbereiche der beiden Halbschalen nebeneinander, sich aneinander stützend angeordnet sind. Zudem ist dabei bevorzugt, dass die Dichtungsbereiche gegenüber den Dichtungen, die auf dem Kragen ringartig vorgesehen sind, schmaler ausgebildet sind, sodass in der Montageendlage die Dichtungsbereiche zusammen etwa die gleiche Breite haben wie die Dichtungen im restlichen Kragenbereich.

Die so erzeugte Überlappung der Dichtungen ermöglicht eine besonders gute Abdichtung gegenüber der Wandungsfläche, an die die Dichtungen in der Endmontage angelegt sind, insbesondere nach Art einer Labyrinthdichtung.

Dabei kann besonders bevorzugt vorgesehen sein, dass die elastische Dichtung jeweils auf einem Absatz am Innenmantel des rohrförmigen Abschnitts des Doppelnippels anliegt oder aufliegt.

Hierdurch ist bei der Verwendung von an dem Absatz anliegenden Dichtkörpern oder Klemmkörpern eine zusätzliche Abdichtung gegenüber dem Dichtkörper oder Klemmkörper ermöglicht.

Auch kann besonders bevorzugt vorgesehen sein, dass alle elastischen Dichtungen raupenförmig auf den Halbschalen angeordnet ist.

Eine derartige Raupenform passt sich beim Zusammensetzen der beiden Halbschalen an die Kontur beziehungsweise Oberfläche der abzudichtenden Flächen oder Teile an und bietet somit eine besonders sichere Abdichtung. Weiter kann besonders bevorzugt vorgesehen sein, dass alle elastischen Dichtungen aus PU-SchaumMaterial besteht.

PU- Schaum hat sich als elastisches Dichtmittel bewährt und stellt eine besonders kostengünstige und dabei langlebige Lösung dar.

Auch kann besonders bevorzugt vorgesehen sein, dass der Kragen einen Ansatz für ein Werkzeug bildet.

Die Ausbildung des Kragens als Ansatz für ein Werkzeug, z.B. einen Schraubenschlüssel, ist an sich bekannt und ermöglicht beim erfindungsgemäßen Doppelnippel und bei der erfindungsgemäßen Spannmutter das schnelle und einfache Verschrauben miteinander und/oder mit einer Druckschraube.

Eine vorteilhafte Ausgestaltung wird zudem darin gesehen, dass jeweils die beiden Stirnflächen der den Führungskanal seitlich begrenzenden Wandungsteile, die jeweils von den hakenartigen Armen überragt sind und jeweils zwei Stirnflächen der zweiten Halbschale die von den Armen überragt sind, unterschiedliche Form, Dimension oder unterschiedliche Vorsprünge aufweisen, sodass die Halbschalen ausschließlich bei gleicher Ausrichtung der Halbschalen zusammensteckbar sind.

Durch diese Ausgestaltung ist ein verwechslungsfreies Aufstecken der beiden Halbschalen ermöglicht, da diese nur in einer Position, nämlich der gewünschten Solllage miteinander verbunden werden können, in der die beiden Halbschalen in richtiger Weise zueinander ausgerichtet sind. Bei einer Ausrichtung der zweiten Halbschale relativ zur ersten Halbschale um 180 Grad um eine Querachse gedreht, wäre ein Zusammenführen der beiden Halbschalen nicht möglich, da dann durch die unterschiedliche Konturierung und Ausgestaltung das Zusammenstecken nicht möglich ist.

Ein Ausführungsbeispiel der Erfindung ist in den Figuren dargestellt und im Folgenden näher beschrieben.

Es zeigt:
- Figur 1: eine erste erfindungsgemäße Halbschale von schräg oben gesehen;
- Figur 2: eine zweite erfindungsgemäße Halbschale von schräg oben gesehen;
- Figur 3: einen erfindungsgemäßen Doppelnippel in Draufsicht teilweise aufgebrochen in einer Vormontagelage;
- Figur 4: desgleichen in der Zusammenbaulage;
- Figur 5: eine zweite Ausführungsform einer zweiten erfindungsgemäßen Halbschale in Schrägansicht;
- Figur 6: eine dazu gehörige Variante der ersten Halbschale in Schrägansicht;
- Figur 7: eine Draufsicht zweier Halbschalen mit Dichtelement von oben gesehen;
- Figur 8: desgleichen in der der Zusammenbaulage;
- Figur 9: eine erste Halbschale einer erfindungsgemäßen Spannmutter in Schrägansicht;
- Figur 10: die dazugehörige zweite Halbschale der Spannmutter;
- Figur 11: die erfindungsgemäße Spannmutter in Montagesollage der beiden Halbschalen in Schrägansicht gesehen.

In den Figuren ist ein Doppelnippel 1 zur abgedichteten Verlegung von Rohren, Leitungen und dergleichen Langformteile durch Lochungen von Gerätewandungen und dergleichen Bauteilen gezeigt. Der Doppelnippel 1 besteht aus einem rohrförmigen Abschnitt mit erstem Außengewinde 2 mit darauf folgendem Kragen 3 zur Anlage an einer Wand und einem zweiten Außengewinde 4 zum Aufschrauben einer Druckschraube. Der Doppelnippel 1 ist längsgeteilt und bildet dadurch axial verlaufende Trennstellen 5 und besteht aus zwei Halbschalen 6,7. Die Halbschalen 6,7 sind miteinander verbindbar. Die Halbschalen 6,7 weisen ineinandergreifende Führungs- und Haltemittel auf, mittels derer die Halbschalen 6,7 in der Zusammenbaulage zueinander gehalten sind. Auf einen Bereich mit Außengewinde 2,4 kann nach erfolgter Montage an einem Bauteil eine Spannmutter 1' aufgeschraubt werden.

Erfindungsgemäß sind die ineinandergreifenden Führungs- und Haltemittel am Kragen 3 ausgebildet. Dabei sind an der ersten Halbschale 6 als Führungs- und Haltemittel sich etwa tangential erstreckende, über die Trennstelle 5 in Richtung zur zweiten Halbschale 7 vorragende, hakenartige Arme 8 ausgebildet. Die hakenartigen Arme 8 übergreifen jeweils in der Zusammenbaulage an der zweiten Halbschale 7 ausgebildete Rastvorsprünge 9. Dabei halten die hakenartigen Arme 8 durch den Eingriff in die Rastausnehmungen oder hinter die Rastvorsprünge 9 die beiden Halbschalen 6,7 zusammen.

Zur Verbindung zweier derartiger Halbschalen 6,7 müssen lediglich die längsgeteilten Halbschalen 6,7 im Bereich des Kragens 3 aneinander gedrückt werden, so dass die hakenartigen Arme 8 der ersten Halbschale 6 an der zweiten Halbschale 7 ausgebildete Rastvorsprünge 9 übergreifen. Bei den in den Figuren gezeigten Ausführungsbeispielen sind an der zweiten Halbschale 7 Rastvorsprünge 9 ausgebildet. Alternativ und in den Figuren nicht gezeigt könnten an dieser Stelle auch Rastausnehmungen ausgebildet sein, in die Haken der hakenartigen Arme 8 der ersten Halbschale 6 eingreifen und die beiden Halbschalen 6,7 zusammenhalten. Insbesondere um die Stabilität in axialer Richtung zu erhöhen, sind an der zweiten Halbschale 7 Führungsstege 10 beidseits neben jedem Rastvorsprung 9 ausgebildet, die eine Führung für die hakenartigen Arme 8 der ersten Halbschale 6 und eine Stabilisierung im Verbindungsbereich bilden.

Im Ausführungsbeispiel ist an dem Innenmantel 11 des rohrförmigen Abschnitts des Doppelnippels 1 ein Absatz 12 ausgebildet. Dieser kann beispielsweise als Anlagefläche für einen in den Doppelnippel eingesteckten Dichtkörper dienen.

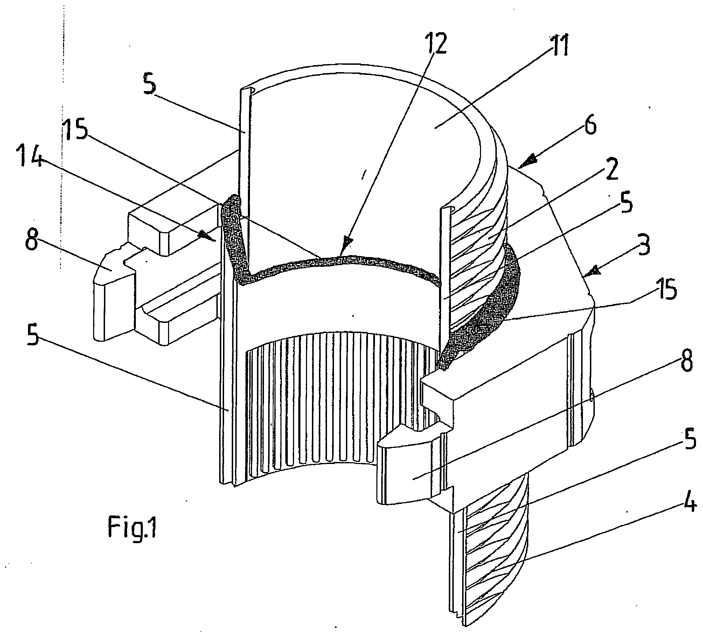

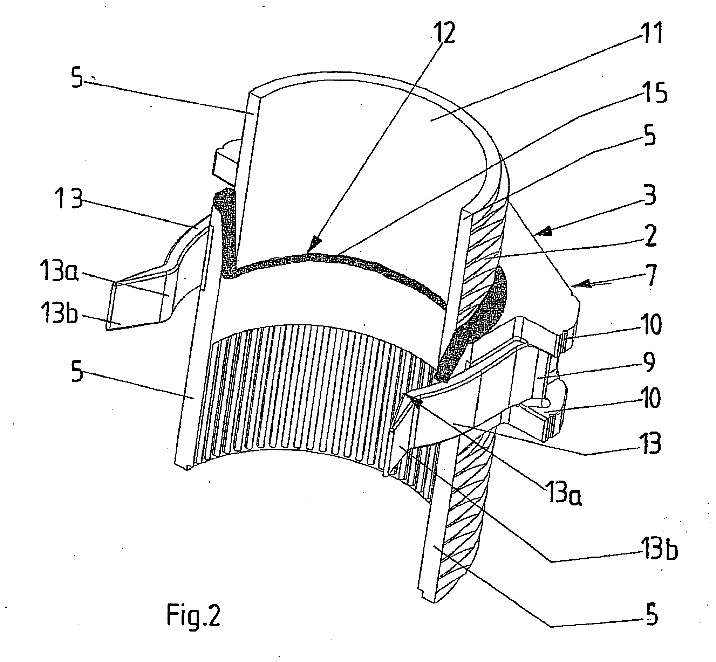

An der zweiten Halbschale 7 sind, wie insbesondere aus Figur 2 ersichtlich, tangential über die Trennstelle 5 hinausragende Arme 13 ausgebildet, die jeweils in einen Führungskanal 14 der ersten Halbschale 6 einsteckbar und in diesem geführt sind. Der Führungskanal 14 an der ersten Halbschale 6 ist im Kragen 3 ausgebildet und mündet zur Trennstelle 5 offen aus. Die Arme 13 stützen sich mit einem Anlagebereich 13a bereits in einer Vormontagelage, in der die beiden Halbschalen 6,7 voneinander beabstandet sind, federnd an einem Mantelbereich des rohrförmigen Abschnitts des Doppelnippels 1 der ersten Halbschale 6 ab. Dabei bildet der rohrförmige Abschnitt des Doppelnippels 1 der ersten Halbschale 6 den Boden des Führungskanals 14 und ermöglicht somit einen Zusammenhalt der beiden Halbschalen 6,7 in der voneinander beabstandeten Vormontagelage. Wie insbesondere aus Figur 1 ersichtlich ist der Führungskanal 14 etwa tangential zum Mantel der ersten Halbschale 6 gerichtet und mündet am hinteren, der Trennstelle 5 abgewandten Ende, offen aus. Damit kann die Verrastung durch Zugriff zum Haken des Armes 8 mittels eines Werkzeuges gelöst werden.

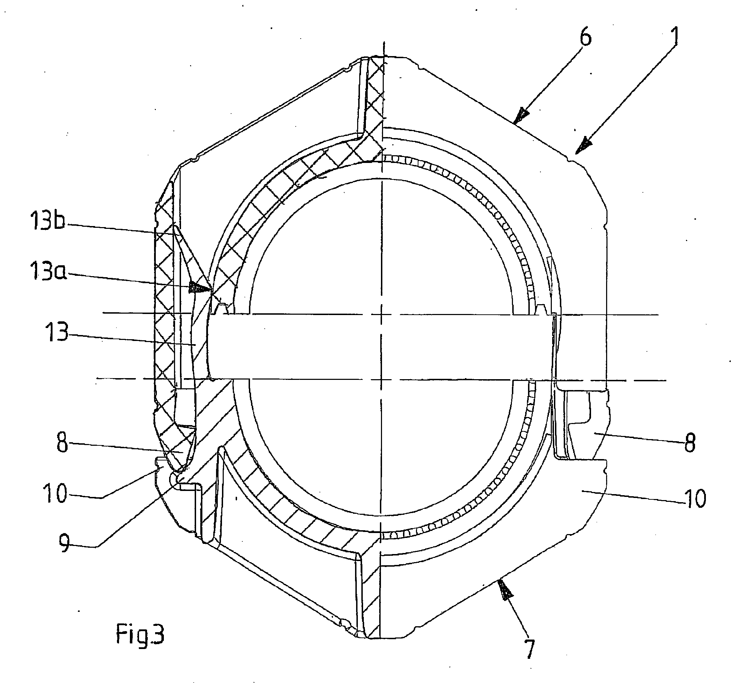

Wie auch aus Figur 2 insbesondere ersichtlich weisen die an der zweiten Halbschale 7 ausgebildeten Arme 13 an ihrem freien Ende einen über den Anlagebereich 13a verlängerten Bereich auf, der eine schräg nach außen ragende Abwinklung 13b aufweist. Die nach außen ragende Abwinklung 13b bildet eine Einführhilfe für die hakenartigen Arme 8 der ersten Halbschale 6. Das freie Ende mit der Abwinklung 13b der an der zweiten Halbschale 7 ausgebildeten Arme 13 ist in der Vormontagelage gemäß Figur 3 in dem Zuführkanal 14 geführt und stützt sich in der Vormontagelage federnd an Teilen der Kontur, die den Zuführkanal 14 bildet, ab. Hierdurch ist der Anlagebereich 13a elastisch gegen den Mantel der ersten Halbschale 6 gepresst und ein Verbleiben der beiden Halbschalen 6,7 in der voneinander beabstandeten Vormontagelage ermöglicht. In dieser Lage liegt das freie Ende des Armes 8 an einer Aufkantung des Rastvorsprunges 9 als merkbare Wegbegrenzung an.

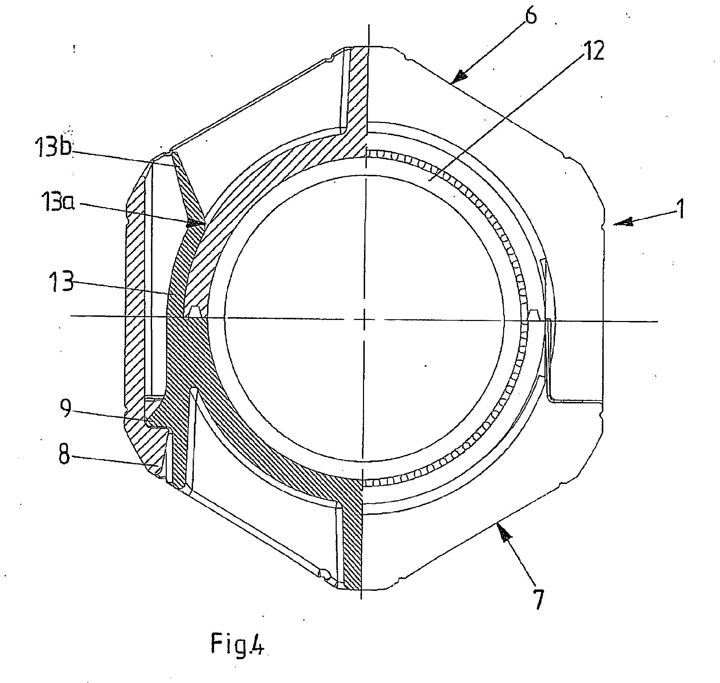

Anschließend können die beiden Halbschalen 6,7, beispielsweise unter Zuhilfenahme eines Werkzeugs wie einer Zange, in die Zusammenbaulage gemäß Figur 4 verpresst werden. Der Haken am hakenartigen Arm 8 wird dabei unter Auffederung des Armes 8 über die Aufkantung des Rastvorsprunges 9 bewegt und fällt in Montageendlage hinter den Rastvorsprung 9 ein. Dies ist insbesondere in Figur 3 und in Figur 4 anschaulich gezeigt.

Wie insbesondere aus den Figuren 1 und 2 ersichtlich ist an jeder Halbschale 6,7 eine elastische Dichtung 15 angeordnet, die sich ohne Unterbrechung ringartig zwischen Kragen 3 und dem rohrförmigen Abschnitt mit erstem Gewinde 2, einen die Trennstelle 5 kreuzenden Bereich und ringartig über den Innenmantel 11 erstreckt. Hierdurch ist in der Zusammenbaulage der beiden Halbschalen 6,7 sowohl eine Abdichtung gegenüber einer Wand, an der der Kragen 3 anliegt, als auch gegenüber einem durch den Doppelnippel 1 geführten Langformteil ermöglicht. Zudem erfolgt durch die sich über einen die Trennstelle 5 kreuzenden Bereich erstreckende Anordnung der elastischen Dichtung 15 eine Abdichtung der beiden Halbschalen 6,7 gegeneinander.

Dabei kann, wie in den Figuren 1 und 2 gezeigt, die elastische Dichtung 15 auf dem Absatz 12 am Innenmantel 11 des rohrförmigen Abschnitts des Doppelnippels 1 anliegen oder aufliegen. Im Ausführungsbeispiel ist die elastische Dichtung 15 raupenförmig ausgebildet und klebend auf den Halbschalen 6,7 angeordnet und besteht aus PU-Schaum- Material.

Der Kragen 3 am Doppelnippel 1 ist als Ansatz für ein Werkzeug ausgebildet. Hierdurch kann auf den Doppelnippel 1 auf schnelle Art und Weise eine Spannmutter oder eine Druckschraube aufgeschraubt werden.

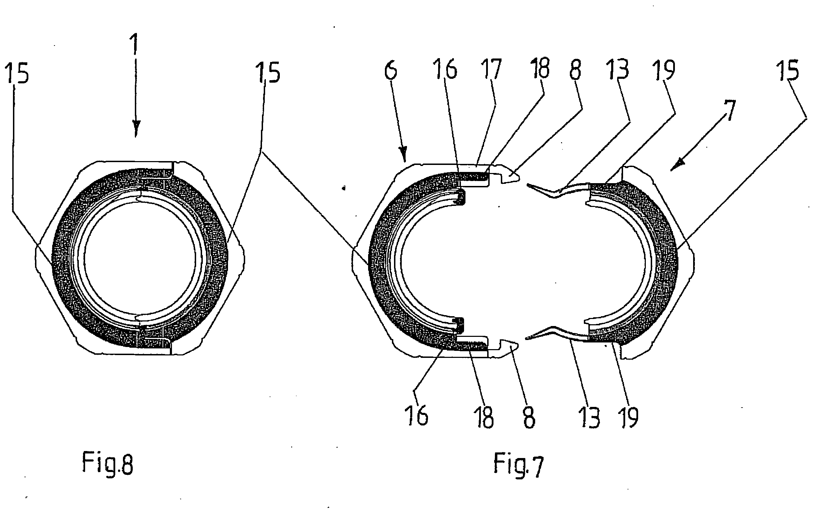

Bei der Ausführungsform, die in Figur 7 und 8 gezeigt ist, ist eine weitere elastische Dichtung 16 auf der Stirnfläche der Trennstelle 5 mindestens einer der beiden Halbschalen 6 oder 7 vorgesehen. Hierdurch wird in der Montagesolllage die Trennstelle zusätzlich abgedichtet. Des Weiteren ist bei dieser Ausführungsform die etwa halbkreisförmige Dichtung 15 der ersten Halbschale 6 so ausgebildet, dass sie sich bis über den den Führungskanal 14 überdeckenden, in Richtung zur zweiten Halbschale 7 vorragenden Steg 17 erstreckt. Ferner erstreckt sich die Dichtung 15 der zweiten Halbschale 7 bis über den bis zur Trennstelle 5 verlaufenden Endbereich des Kragens 3. Diese Endbereiche sind schmaler ausgebildet als der übrige Bereich der Dichtung 15. In der Endmontagesolllage, die in Figur 8 gezeigt ist, liegen die beiden Dichtungsbereiche 18, 19 der beiden Halbschalen 6, 7 nebeneinander und stützen sich aneinander an, um in diesem Bereich eine optimale Abdichtung zu erreichen.

Diese gegenüber den Dichtungen 15 schmaleren Dichtungsbereiche 18,19 haben etwa die halbe Breite der Dichtung 15, sodass sie in der Zusammenbaulage etwa die gleiche Breite haben, wie die Dichtungen 15 im restlichen Bereich des Kragens 3.

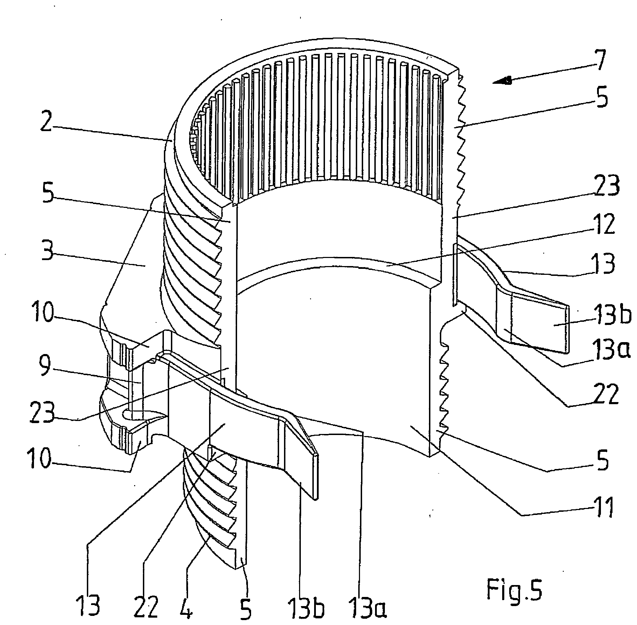

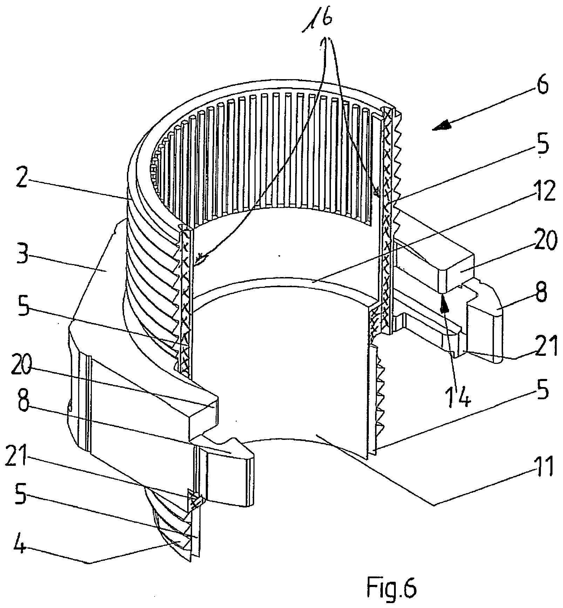

Die Figuren 5 und 6 zeigen eine weitere Variante, bei der die beiden Stirnflächen 20, 21 der der in Führungskanal 14 der ersten Halbschale 6 seitlich begrenzenden Wandungsteile, die jeweils von den hakenartigen Armen 8 überragt sind und auch jeweils 2 Stirnflächen 22, 23 der zweiten Halbschale 7, die von den Armen 13 überragt sind, unterschiedliche Form, Dimension oder unterschiedliche Art von Vorsprüngen auf, sodass ein Zusammenstecken der Halbschalen 6, 7 ausschließlich in der Ausrichtung der Halbschalen möglich ist, wie sie in der Zeichnung gezeigt ist. Bei einer Ausrichtung der Halbschalen zueinander, bei der beispielsweise die Halbschale gemäß Figur 5 um 180 Grad um eine die Zeichnung von vorn nach hinten durchdringende Achse gedreht ist, ist ein Zusammenstecken nicht möglich, da die unterschiedlichen Stirnflächen 20, 21, 22, 23 ein solches Zusammenstecken verhindern. Es ist damit eine verwechslungsfreie Zuordnung der Teile in einfacher Weise erreicht. Auch bei dieser Variante ist eine Dichtung 16, die durch Kreuzschraffur verdeutlicht ist, auf der Stirnfläche der Trennstelle 5 vorgesehen.

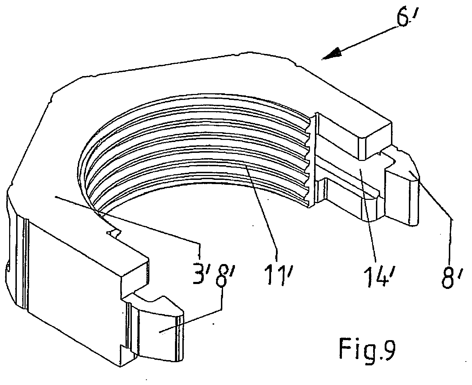

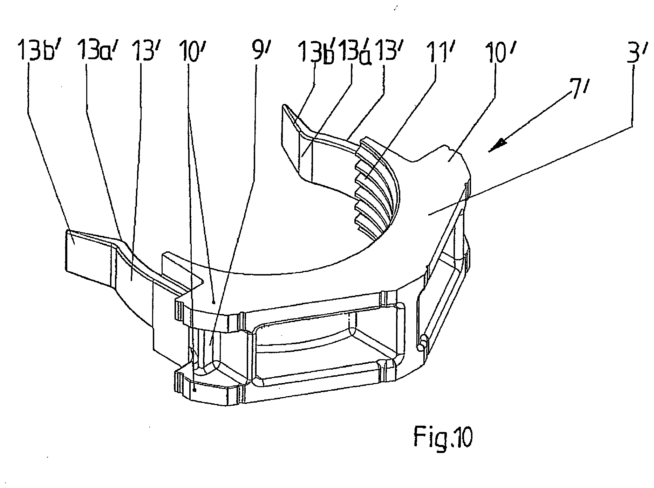

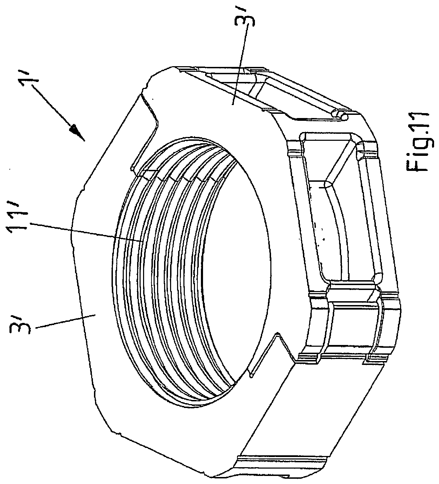

In den Zeichnungsfiguren 9, 10, 11 ist eine erfindungsgemäß ausgebildete Spannmutter 1' gezeigt. Diese ist nach der gleichen Technik und nach der gleichen Ausbildung des Kragens des Doppelnippels gestaltet. Prinzipgleiche Teile sind mit gleichen Bezugszeichen versehen, wobei bei der Ausführungsform nach Figur 9, 10 und 11 lediglich ein "'" bei den Bezugszeichen hinzugefügt ist, um diese von der anderen Ausführungsform des Doppelnippels zu unterscheiden. Eine solche Spannmutter 1' kann in dem zerlegten Zustand, wie er in den Figuren 9 und 10 gezeigt ist, ebenfalls radial auf ein schon verlegtes Langformteil aufgebracht werden, um den Doppelnippel zu ergänzen. In der Montagesolllage, die in Figur 11 gezeigt ist, kann die Spannmutter 1' mit dem Innengewinde 11' auf den entsprechenden mit Gewinde versehenen Stutzen des Doppelnippels 1 aufgeschraubt werden.

Analog der Ausgestaltung des Doppelnippels 1 weist die Spannmutter 1' einen Kragen 3' auf, der in Montagesolllage an der entsprechenden Wandungsfläche zur Anlage kommt, der von dem einen Gewindestutzen des Doppelnippels 1 durchgriffen ist, wenn die Spannmutter 1' hierauf aufgeschraubt ist. Auch die Spannmutter 1' bildet durch entsprechende Längsteilung zwei Halbschalen 6', 7'. Diese Halbschalen 6', 7' sind miteinander verbindbar. Dazu sind ineinander greifende Führungs- und Haltemittel am Kragen 3' ausgebildet. Ebenso wie bei dem Doppelnippel 1 sind an der ersten Halbschale 6' als Führungs- und Haltemittel sich etwa tangential erstreckende, über die Trennstelle der beiden Halbschalen 6', 7' in Richtung zur zweiten Halbschale 7' vorragende hakenartige Arme 8' ausgebildet, die in der Zusammenbaulage an der zweiten Halbschale 7' ausgebildete Rastvorsprünge 9' übergreifen. Hierdurch werden die beiden Halbschalen 6', 7' zusammengehalten. Zur Verbindung der beiden Halbschalen 6', 7' werden die längsgeteilten Halbschalen 6', 7' im Bereich des Kragens 3' aneinandergedrückt, sodass die hakenartigen Arme 8' der ersten Halbschale 6' die an der zweiten Halbschale 7' ausgebildeten Rastvorsprünge 9' übergreifen.

Um die Stabilität in axialer Richtung zu erhöhen, sind an der zweiten Halbschale 7' Führungsstege 10' beidseits neben jedem Rastvorsprung 9' ausgebildet, die eine Führung für die hakenartigen Arme 8' der ersten Halbschale 6' bilden und eine Stabilisierung im Verbindungsbereich herbeiführen.

Wie aus den Figuren ersichtlich, ist am Innenmantel der Spannmutter 1' Innengewinde 11' ausgebildet.

An der zweiten Halbschale 7' sind tangential über die Trennstelle der Teile hinausragende Arme 13' ausgebildet, die jeweils in einen Führungskanal 14' der ersten Halbschale 6' einsteckbar und in diesem geführt sind. Der Führungskanal 14' an der ersten Halbschale 6' ist in einem Hohlraum des Kragens 3' ausgebildet und mündet zur Trennstelle hin offen aus. Die Arme 13' stützen sich in einer Vormontagelage mit einem Anlagebereich 13a' bereits federnd an einem Mantelbereich im Kragen der ersten Halbschale 6' ab. Dabei bildet der Innenmantel der Spannmutter 1' der ersten Halbschale 6' den Boden des Führungskanals 14' und ermöglicht somit ein Zusammenhalt der beiden Halbschalen 6', 7' in einer voneinander beabstandeten Vormontagelage analog der Darstellung in Figur 3.

In der Vormontagelage und in der Endmontagelage ist der Führungskanal 14' etwa tangential zum Mantel der ersten Halbschale 6' gerichtet und mündet am hinteren, der Trennstelle der Halbschalen abgewandten Ende offen aus. Damit kann die Verrastung durch Zugriff zum Haken des hakenartigen Armes 8' mittels eines Werkzeuges, beispielsweise mittels eines Schraubendrehers, gelöst werden.

Die an der zweiten Halbschale 7' ausgebildeten Arme 13' weisen an ihrem freien Ende einen über den Anlagebereich 13a' verlängerten Bereich auf, der eine schräg nach außen ragende Abwinklung 13b' bildet. Diese Abwinklung 13b' bildet eine Einführhilfe für die hakenartigen Arme 8' der ersten Halbschale 6'. Das freie Ende mit der Abwinklung 13b' der an der zweiten Halbschale 7' ausgebildeten Arme 13' ist in der Vormontagelage in den Zuführkanal 14' geführt und stützt sich in der Vormontagelage federnd an Teilen der Kontur ab, die den Zuführkanal 14' bildet. Hierdurch ist der Anlagebereich 13a' elastisch gegen den Innenmantel der ersten Halbschale 6' gepresst und ein Verbleiben der beiden Halbschalen 6', 7' in der voneinander beabstandeten Vormontagelage ist erreicht. In dieser Lage liegt das freie Ende des Armes 8' an einer Aufkantung des Rastvorsprunges 9' als merkbare Wegbegrenzung an. Anschließend können die beiden Halbschalen 6', 7' beispielsweise unter zu Hilfenahme eines Werkzeuges, wie einer Zange, in die Zusammenbaulage gemäß Figur 11 gedrückt werden. Auch bei der Spannmutter 1' bildet der Kragen 3' einen Ansatz für ein Werkzeug, beispielsweise einen Schraubenschlüssel, damit die Spannmutter 1' in einfacher Weise auf den entsprechenden Gewindestutzen des Doppelnippels 1 aufgeschraubt werden kann.

**Bezugszeichenliste:**

| | | | |
|---|---|---|---|
| 1 | Doppelnippel; | 1' | Spannmutter |
| 2 | Außengewinde (durchstecken) | | |
| 3, 3' | Kragen | | |
| 4 | Außengewinde (für Druckschrauben) | | |
| 5 | Trennstellen | | |
| 6, 6' | erste Halbschale | | |
| 7, 7' | zweite Halbschale | | |
| 8, 8' | hakenartige Arme | | |
| 9, 9' | Rastvorsprünge | | |
| 10, 10' | Führungsstege neben 9 | | |
| 11 | Innenmantel v. 1; | 11' | Innengewinde |
| 12 | Absatz an 11 | | |
| 13, 13' | Arme | | |
| 13a | Anlagebereich | | |
| 13b | Abwinklung | | |
| 14, 14' | Führungskanal | | |
| 15 | Dichtung | | |
| 16 | Dichtung | | |
| 17 | Steg | | |
| 18 | Dichtungsbereich | | |
| 19 | Dichtungsbereich | | |
| 20 | Stirnfläche | | |
| 21 | Stirnfläche | | |
| 22 | Stirnfläche | | |
| 23 | Stirnfläche | | |

## Patentansprüche

1. Doppelnippel (1) und/oder Spannmutter (1') zur abgedichteten Verlegung von Rohren, Leitungen und dergleichen Langformteilen durch Lochungen von Gerätewandungen und dergleichen Bauteilen, wobei der Doppelnippel (1) zumindest aus einem rohrförmigen Abschnitt mit erstem Außengewinde (2), auf das eine Druckschraube aufschraubbar ist, sowie mit darauf folgendem Kragen (3) zur Anlage an der Wandung, einem zweiten Außengewinde (4) zur Verschraubung einer Spannmutter mit Innengewinde (11') und außen umlaufendem Kragen besteht, wobei der Doppelnippel (1) und/oder die Spannmutter (1') längsgeteilt ist und somit Trennstellen (5) bildet und aus zwei Halbschalen (6,7; 6', 7') besteht, die miteinander verbindbar sind, die ineinander greifende Führungs- und Haltemittel aufweisen, mittels derer die Halbschalen (6,7; 6', 7') in der Zusammenbaulage zueinander gehalten sind, wobei die ineinander greifenden Führungs- und Haltemittel am Kragen (3, 3') ausgebildet sind, wobei als Führungs- und Haltemittel an der ersten Halbschale (6, 6') sich etwa tangential erstreckende, über die Trennstelle (5) in Richtung zur zweiten Halbschale (7, 7') vorragende, hakenartige Arme (8, 8') ausgebildet sind, die jeweils in der Zusammenbaulage in an der zweiten Halbschale (7, 7') ausgebildete Rastausnehmungen eingreifen oder dort ausgebildete Rastvorsprünge (9, 9') übergreifen und die beiden Halbschalen (6,7; 6', 7') zusammenhalten, **dadurch gekennzeichnet, dass** an der zweiten Halbschale (7, 7') über die Trennstelle (5) in Richtung zur ersten Halbschale (6, 6')hinausragende Arme (13, 13') ausgebildet sind, die jeweils in einen Führungskanal (14, 14') der ersten Halbschale (6, 6') einsteckbar und in diesem geführt sind, der im Kragen (3, 3') ausgebildet ist und zur Trennstelle (5) offen ausmündet, und die sich mit einem Anlagebereich (13a, 13a') federnd an einem äußeren Mantelbereich eines rohrförmigen Abschnitts des Doppelnippels (1) oder der Spannmutter (1') der ersten Halbschale (6, 6') abstützen, der den Boden des Führungskanals (14, 14') bildet, und die beiden Halbschalen (6,7; 6', 7') in einer voneinander beabstandeten Vormontagelage aneinander halten, in der die hakenartigen Arme (8, 8') mit ihrem freien Endbereich an die Rastvorsprüngen (9, 9') angelegt sind, ohne sie zu übergreifen.

2. Doppelnippel (1) oder Spannmutter (1') nach Anspruch 1, **dadurch gekennzeichnet, dass** an der zweiten Halbschale (7, 7') Führungsstege (10, 10') beidseits neben jeder Rastausnehmung oder neben jedem Rastvorsprung (9, 9') ausgebildet sind, die eine Führung für die hakenartigen Arme (8, 8') der ersten Halbschale (6, 6') bilden.

3. Doppelnippel (1) nach Anspruch 1 oder 2, **dadurch gekennzeichnet, dass** an dem Innenmantel (11) des rohrförmigen Abschnitts des Doppelnippels (1) ein Absatz (12) ausgebildet ist.

4. Doppelnippel (1) oder Spannmutter (1') nach Anspruch 1, **dadurch gekennzeichnet, dass** der Führungskanal (14, 14') etwa tangential zum Mantel der ersten Halbschale (6, 6') gerichtet ist und auch am hinteren, der Trennstelle (5) abgewandten Ende offen ausmündet.

5. Doppelnippel (1) oder Spannmutter (1') nach Anspruch 1 oder 4, **dadurch gekennzeichnet, dass** die an der zweiten Halbschale (7, 7') ausgebildeten Arme (13, 13') an ihrem freien Ende eine von dem Anlagebereich (13a, 13a') nach außen ragende Abwinklung (13b, 13b') aufweisen, die eine Einführhilfe für die geschrägten Endbereiche der hakenartigen Arme (8, 8') der ersten Halbschale (6, 6') bildet.

6. Doppelnippel (1) oder Spannmutter (1') nach Anspruch 5, **dadurch gekennzeichnet, dass** das freie Ende der an der zweiten Halbschale (7, 7') ausgebildeten Arme (13, 13') in der Vormontagelage in dem Zuführkanal (14, 14') geführt ist, wobei sich die Abwinklung (13b, 13b') in der Vormontagelage an Teilen der Kontur, die den Zuführkanal (14, 14') bildet, federnd abstützt und somit den Anlagebereich (13a, 13a') gegen den äußeren Mantel der ersten Halbschale (6) in einem Bereich presst, der von dem Führungskanal (14, 14') überdeckt ist.

7. Doppelnippel (1) nach einem der Ansprüche 1 bis 6, **dadurch gekennzeichnet, dass** an jeder Halbschale (6,7) eine elastische Dichtung (15) angeordnet ist, die sich ohne Unterbrechung ringartig zwischen Kragen (3) und dem rohrförmigen Abschnitt mit erstem Gewinde (2) erstreckt.

8. Doppelnippel (1) nach Anspruch 7, **dadurch gekennzeichnet, dass** sich die elastische Dichtung (15) jeweils über einen die Trennstelle (5) kreuzenden Bereich und ringartig über den Innenmantel (11) der Halbschalen (6, 7) erstreckt.

9. Doppelnippel (1) nach Anspruch 7, **dadurch gekennzeichnet, dass** eine weitere elastische Dichtung (16) auf der Stirnfläche der Trennstelle (5) mindestens einer Halbschale (6 oder 7) vorgesehen ist.

10. Doppelnippel (1) nach Anspruch 7, **dadurch gekennzeichnet, dass** die Dichtung (15) der ersten Halbschale (6) bis über den den Führungskanal (14) überdeckenden, in Richtung zur zweiten Halbschale (7) vorragenden Steg (17) erstreckt, dass ferner die Dichtung (15) der zweiten Halbschale (7) bis über den bis zur Trennstelle (5) verlaufenden Endbereich des Kragens (3) erstreckt, sodass in der Endmontagesolllage Dichtungsbereiche (18, 19) der beiden Halbschalen (6, 7) nebeneinander, sich aneinander stützend angeordnet sind.

11. Doppelnippel (1) nach Anspruch 10, **dadurch gekennzeichnet, dass** die Dichtungsbereiche (18, 19) gegenüber den Dichtungen (15), die auf dem Kragen (3) ringartig vorgesehen sind, schmaler ausgebildet sind, sodass in der Montageendlage die Dichtungsbereiche (18, 19) zusammen etwa die gleiche Breite haben wie die Dichtungen (15) im restlichen Kragenbereich.

12. Doppelnippel (1) nach Anspruch 8, **dadurch gekennzeichnet, dass** die elastische Dichtung (15) jeweils auf einem Absatz (12) am Innenmantel (11) des rohrförmigen Abschnitts des Doppelnippels (1) anliegt oder aufliegt.

13. Doppelnippel (1) nach einem der Ansprüche 7 bis 12, **dadurch gekennzeichnet, dass** alle elastischen Dichtungen (15, 16) raupenförmig auf den Halbschalen (6,7) angeordnet sind.

14. Doppelnippel (1) nach einem der Ansprüche 7 bis 13, **dadurch gekennzeichnet, dass** alle elastischen Dichtungen (15, 16) aus PU-SchaumMaterial besteht.

15. Doppelnippel (1) nach einem der Ansprüche 1 bis 14, **dadurch gekennzeichnet, dass** der Kragen (3) einen Ansatz für ein Werkzeug bildet.

16. Doppelnippel (1) nach einem der Ansprüche 1 bis 15, **dadurch gekennzeichnet, dass** jeweils die beiden Stirnflächen (20, 21) der den Führungskanal (14) seitlich begrenzenden Wandungsteile, die jeweils von den hakenartigen Armen (8) überragt sind, und jeweils zwei Stirnflächen (22, 23) der zweiten Halbschale (7) die von den Armen (13) überragt sind, unterschiedliche Form, Dimension oder unterschiedliche Vorsprünge aufweisen, sodass die Halbschalen (6, 7) ausschließlich bei gleicher Ausrichtung der Halbschalen (6,7) zusammensteckbar sind.

## Claims

1. Double nipple (1) and/or clamping nut (1) for the sealed laying of tubes, pipes and similar elongated molded parts by punching of equipment walls and similar structural components, wherein the double nipple (1) at least consists of one tube-like portion having a first external thread (2), onto which a pressure screw can be screwed on, and having a subsequent collar (3) to be applied at the wall, a second external thread (4) for screwing a clamping nut with internal thread (11') and externally circulating collar, wherein the double nipple (1) and/or the clamping nut (1') is longitudinally divided and thus forming separating points (5) and consisting of two half shells (6, 7; 6', 7'), which can be connected with one another, having engaging guidance and positioning means for holding together the half shells (6, 7'; 6, 7') in the assembled state, wherein the engaging guidance and positioning means are formed at the collar (3, 3'), wherein approximately tangentially extending, beyond the separating point (5) in direction of the second half shell (7, 7') protruding hook-like arms (8, 8') are formed as guidance and positioning means at the first half shell (6, 6'), each of which in its assembled state engaging in latching recesses or engaging over latching projections (9, 9') being formed at the second half shell (7, 7'), thus holding together the two half shells (6, 7'; 6, 7'), **characterized in that** at the second half shell (7, 7') arms (13, 13') extending beyond the separating point (5) in the direction of the first half shell (6, 6'), are formed, each of which can be fitted into a guiding channel (14, 14') of the first half shell (6, 6') and being guided in it, the guiding channel (14, 14') being formed in the collar (3, 3') and opening towards the separating point (5), and the arms (13, 13') having an attachment region (13a, 13a') leaning resiliently at an outer casing region of a tube-like section of the double nipple (1) or the clamping nut (1') of the first half shell (6, 6'), the casing region forming the bottom of the guiding channel (14, 14') which holds the two half shells (6, 7; 6', 7') to one another in a spaced pre-assembly position, in which the hook-like arms (8, 8') are attached to the latching projections (9, 9') with their free end region, without overlapping them.

2. Double nippel (1) or clamping nut (1') according to claim 1, **characterized in that** guide webs (10, 10') are formed on both sides of the second half shell (7, 7') on both sides next to each latching recess or next to each latching projection (9, 9'), forming a guidance for the hook-like arms (8, 8') of the first half shell (6, 6').

3. Double nipple (1) according to claim 1 or 2, **characterized in that** a step (12) is formed at the inner casing (11) of the tube-like section of the double nipple (1).

4. Double nipple (1) or clamping nut (1') according to claim 1, **characterized in that** the guiding channel (14, 14') is directed approximately tangentially towards the casing of the first half shell (6, 6'), also opening at the rear end not facing the separating point (5).

5. Double nippel (1) or clamping nut (1') according to claim 1 or 4, **characterized in that** the arms (13, 13') formed at the second half shell (7, 7') have an angular deflection (13b, 13b') at their free end, which protrudes outwardly from the attachment region (13a, 13a'), forming an insertion aid for the chamfered end regions of the hook-like arms (8, 8') of the first half shell (6, 6').

6. Double nipple (1) or clamping nut (1') according to claim 5, **characterized in that** the free end of the arms (13, 13') formed at the second half shell (7, 7') is in its pre-assembly position guided in the guiding channel (14, 14'), wherein the angular deflection (13b, 13b') is in its pre-assembly position resiliently supported at parts of the contour forming the guiding channel (14, 14') and thus pressing the attachment region (13a, 13a') against the outer casing of the first half shell (6) in a region being covered by the guiding channel (14, 14').

7. Double nipple (1) according to anyone of the claims 1 to 6, **characterized in that** an elastic seal (15) is arranged at each half shell (6, 7), extending without interruption like a ring between collar (3) and the tube-like section with first thread (2).

8. Double nippel (1) according to claim 7, **characterized in that** each of the elastic seals (15) extends over a region crossing the separating point (5) and like a ring over the inner casing (11) of the half shells (6, 7).

9. Double nipple (1) according to claim 7, **characterized in that** a further elastic seal (16) is provided on the front face of the separating point (5) of at least one half shell (6 or 7).

10. Double nipple (1) according to claim 7, **characterized in that** the seal (15) of the first half shell (6) extends until beyond the web (17) covering the guiding channel (14) and protruding in the direction of the second half shell (7), so that furthermore, the seal (15) of the second half shell (7) extends until beyond the end region of the collar (3) which extends up to the separating point (5), so that in the desired final assembly position, seal regions (18, 19) of the two half shells (6, 7) are arranged adjacently and supporting each other.

11. Double nippel (1) according to claim 10, **characterized in that** the seal regions (18, 19) are formed narrower compared to the seals (15) being provided in ring shape on the collar (3), so that in the final assembly position, the seal regions (18, 19) together have approximately the same width as the seals (15) in the remaining collar region.

12. Double nipple (1) according to claim 8, **characterized in that** each of the elastic seals (15) lies on or at a step (12) at the inner casing (11) of the tube-like portion of the double nipple (1).

13. Double nipple (1) according to anyone of the claims 7 to 12, **characterized in that** all elastic seals (15, 16) are arranged caterpillar-shaped on the half shells (6, 7).

14. Double nipple (1) according to anyone of the claims 7 to 13, **characterized in that** all elastic seals (15, 16) are made of PU foam material.

15. Double nipple (1) according to anyone of the claims 1 to 14, **characterized in that** the collar (3) forms a lug for a tool.

16. Double nipple (1) according to anyone of the claims 1 to 15, **characterized in that** each of the two front faces (20, 21) of the wall parts laterally confining the guiding channel (14), being each overlapped by the hook-like arms (8), and each of two front faces (22, 23) of the second half shell (7) being overlapped by the arms (13), have differing forms, dimensions or different protrusions, so that the half shells (6, 7) can be fit together only when the half shells (6, 7) are aligned correspondingly.

## Revendications

1. Raccord double (1) et/ou écrou de serrage (1') pour la pose étanche de tuyaux, conduites et pièces formées allongées similaires, à travers des trous de parois d'appareil et composants similaires, le raccord double (1) étant constitué au moins d'une section en forme de tuyau avec un premier filetage externe (2), sur lequel une vis à pression peut être vissée, ainsi qu'avec un deuxième filetage extérieur (4), sur lequel un collier (3) est adjacent pour l'installation sur la paroi, pour le vissage d'un écrou de serrage avec un filetage intérieur (11') et un collier circonférentiel externe, le raccord double (1) et/ou l'écrou de serrage (1') étant divisé(s) longitudinalement, et formant ainsi des points de séparation (5) et étant constitué(s) de deux demi coques (6, 7 ; 6', 7'), qui peuvent être reliées ensemble, qui comportent des moyens de guidage et de maintien s'engageant mutuellement, au moyen desquels les demi-coques (6, 7 ; 6', 7') sont maintenues l'une avec l'autre dans la position de montage, les moyens de guidage et de maintien, s'engageant mutuellement, étant réalisés au niveau du collier (3, 3'), des bras (8, 8') en forme de crochet, en saillie, en direction de la deuxième demi-coque (7, 7'), sur le point de séparation (5), s'étendant à peu près tangentiellement au niveau de la première demi-coque (6, 6'), étant réalisés en tant que moyens de guidage et de maintien, qui viennent en prise respectivement, dans la position de montage, dans des évidements d'encliquetage réalisés dans la deuxième demi-coque (7, 7') ou chevauchent des saillies d'encliquetage (9, 9') ici réalisées, et maintenant ensemble les deux demi-coques (6, 7 ; 6', 7'), **caractérisé en ce qu'**au niveau de la deuxième demi-coque (7, 7'), au-delà du point de séparation (5), en direction de la première demi-coque (6, 6'), sont réalisés des bras faisant saillie (13, 13') qui peuvent être respectivement insérés dans un canal de guidage (14, 14') de la première demi-coque (6, 6') et sont guidés dans celui-ci, qui est réalisé dans le collier (3, 3') et débouche ouvert vers le point de séparation (5) et qui s'appuient avec une zone d'application (13a, 13a') souplement au niveau d'une zone d'enveloppe extérieure d'une section en forme de tuyau du raccord double (1) ou de l'écrou de serrage (1') de la première demi-coque (6, 6'), qui forme le fond du canal de guidage (14, 14') et maintiennent l'une à l'autre les deux demi-coques (6, 7 ; 6', 7') dans une position de prémontage les espaçant, dans laquelle les bras en forme de crochet (8, 8') sont posés avec leur extrémité libre au niveau des saillies d'encliquetage (9, 9'), sans les chevaucher.

2. Raccord double (1) et/ou écrou de serrage (1') selon la revendication 1, **caractérisé en ce qu'**au niveau de la deuxième demi-coque (7, 7'), des barrettes de guidage (10, 10'), sont réalisées de part et d'autre, à côté de chaque évidement d'encliquetage ou à côté de chaque saillie d'encliquetage (9, 9'), qui forment un guidage pour les bras (8, 8') en forme de crochet de la première demi-coque (6, 6').

3. Raccord double (1) selon la revendication 1 ou 2, **caractérisé en ce qu'**un décrochement (12) est réalisé au niveau de l'enveloppe intérieure (11) de la section en forme de tuyau du raccord double (1).

4. Raccord double (1) ou écrou de serrage (1') selon la revendication 1, **caractérisé en ce que** le canal de guidage (14, 14') est orienté à peu près tangentiellement à l'enveloppe de la première demi-coque (6, 6') et débouche, ouvert, également, au niveau de l'extrémité arrière, opposée au point de séparation (5).

5. Raccord double (1) ou écrou de serrage (1') selon la revendication 1 ou 4, **caractérisé en ce que** les bras (13, 13') réalisés au niveau de la deuxième demi-coque (7, 7') comportent au niveau de leur extrémité libre une partie repliée (13b, 13b') en saillie vers l'éxtérieur de la zone d'application (13a, 13a') qui forme un dispositif auxiliaire d'insertion pour les extrémités inclinées des bras en forme de crochet (8, 8') de la première demi-coque (6, 6').

6. Raccord double (1) ou écrou de serrage (1') selon la revendication 5, **caractérisé en ce que** l'extrémité libre des bras (13, 13') réalisés au niveau de la deuxième demi-coque (7, 7') est guidée, en position de prémontage, dans le canal de guidage (14, 14'), la partie repliée (13b, 13b') s'appuyant, de façon souple, en position de prémontage, au niveau des éléments du contour qui forme le canal de guidage (14, 14b') et pressant, ainsi, la zone d'application (13a, 13a') contre l'enveloppe extérieure de la première demi-coque (6) dans une zone qui est recouverte par le canal de guidage (14, 14').

7. Raccord double (1) selon l'une des revendications 1 à 6, **caractérisé en ce qu'**au niveau de chaque demi-coque (6, 7), est disposée une étanchéité (15) élastique qui s'étend, sans interruption, de façon annulaire, entre le collier (3) et la section en forme de tuyau avec le premier filetage (2).

8. Raccord double (1) selon la revendication 7, **caractérisé en ce que** l'étanchéité (15) élastique s'étend, à chaque fois sur une zone, qui croise le point de séparation (5), et de façon annulaire sur l'enveloppe intérieure (11) des demi-coques (6, 7).

9. Raccord double (1) selon la revendication 7, **caractérisé en ce qu'**une autre étanchéité (16) élastique est prévue sur la face frontale du point de séparation (5) d'au moins une demi-coque (6 ou 7).

10. Raccord double (1) selon la revendication 7, **caractérisé en ce que** l'étanchéité (15) de la première demi-coque (6) s'étend jusque sur la barrette (17) en saillie en direction de la deuxième demi-coque (7), recouvrant le canal de guidage (14), **en ce qu'**en outre, l'étanchéité (15) de la deuxième demi-coque (7) s'étend jusque sur l'extrémité, passant jusqu'à la position de rupture (5), du collier (3) de sorte que dans la position théorique de montage final, les zones d'étanchéité (18, 19) des deux demi-coques (6, 7) sont disposées côte à côte, s'appuyant les unes aux autres.

11. Raccord double (1) selon la revendication 10, **caractérisé en ce que** les zones d'étanchéité (18, 19) sont réalisées plus minces, par rapport aux étanchéités (15) qui sont prévues sur le collier (3) de façon annulaire, de sorte qu'en position finale de montage, les zones d'étanchéité (18, 19) présentent ensemble à peu près la même largeur que celle des étanchéités (15) dans la zone restante du collier.

12. Raccord double (1) selon la revendication 8, **caractérisé en ce que** l'étanchéité (15) élastique est placée ou repose à chaque fois sur un décrochement (12) au niveau de l'enveloppe intérieure (11) de la section en forme de tuyau du raccord double (1).

13. Raccord double (1) selon l'une des revendications 7 à 12, **caractérisé en ce que** toutes les étanchéités (15, 16) élastiques sont disposées en forme de chenille sur les demi-coques (6, 7).

14. Raccord double (1) selon l'une des revendications 7 à 13, **caractérisé en ce que** toutes les étanchéités (15, 16) élastiques sont en mousse de polyuréthane.

15. Raccord double (1) selon l'une des revendications 1 à 14, **caractérisé en ce que** le collier (3) forme une rallonge pour un outil.

16. Raccord double (1) selon l'une des revendications 1 à 15, **caractérisé en ce que**, respectivement, les deux faces frontales (20, 21) des parties de parois limitant latéralement le canal de guidage (14), qui sont respectivement surmontées par les bras en forme de crochet (8), et qu'à chaque fois, les deux faces frontales (22, 23) de la deuxième demi-coque (7) qui sont surmontées par les bras (13), comportent des saillies différentes ou des dimension et forme différentes, de sorte que les demi-coques (6, 7) peuvent être emboîtées ensemble uniquement si les demi-coques (6, 7) sont dans le même alignement.
